# EUROPEAN PATENT APPLICATION

(11) **EP 1 840 875 A1**
(43) Date of publication of application: **03.10.2007**
(21) Application number: 06006924.2
(22) Date of filing: 31.03.2006
(51) Int. Cl.: G10L 19/14, H04N 7/26

(54) **Signal coding and decoding with pre- and post-processing**

(71) Applicant: SONY DEUTSCHLAND GMBH, 10785 Berlin (DE)
(72) Inventor: Lei, Zhichun, 70327 Stuttgart (DE); Unruh, Christian, 70327 Stuttgart (DE); Zimmermann, Klaus, 70327 Stuttgart (DE)
(74) Representative: Körber, Martin Hans

(57) **Abstract**

The present invention relates to the field of data compression. More particularly, the present invention relates to the pre-processing which is applied to a signal before it is encoded and to the post-processing of a signal after it is decoded. The present invention provides a pre-processor for signals to be encoded comprising a filtering device for filtering a signal with one or more filters and a providing device for providing information about the filtering process. The present invention further provides a post-processor for previously filtered, encoded and decoded signals comprising an information retrieving device for retrieving information about the filtering process and an inverse filtering device for inverse filtering the decoded signal based on the retrieved information.

## Description

### FIELD OF THE INVENTION

This invention relates to the field of data compression. More particularly, the present invention relates to the pre-processing which is applied to a signal before it is encoded and to the post-processing of a signal after it is decoded.

### DESCRIPTION OF RELATED PRIOR ART

Data compression is widely employed to decrease the bandwidth needed for transmission of digital signals and to reduce the storage capacity needed for storing digital signals. Compression and decompression of signals is also referred to as (en)coding and decoding of signals. The word codec describes a device, a method or a program capable of performing the encoding and decoding procedure on the signal. Specifically the word codec may refer to abstract device, method or program, that performs the encoding and the decoding according to a specific standard. Dependent on the context in which it is employed however, it may also refer to only the encoding part or only the decoding part. For signals where exact reproduction after an encoding and decoding cycle is not mandatory, as is for example frequently the case for audio and video signals, lossy compression is favored over lossless compression since a far better compression rate is achieved and the computational cost is lower.
Numerous coding standards have been defined, in the case of video signals for example the well-known MPEG-2 and AVC standards, the latter is also known as H.264 and MPEG-4 Part 10. It is to expect that more and more coding standards will be defined in the future. Pre-processing of the signal offers significant performance improvement as well as obvious resource savings to the codec. One of the pre-processing tasks is noise reduction because encoding noise is a waste of bandwidth.

Removing noise enables improved delivery at lower bit rates. In the case of video material, the interlaced to progressive format conversion, which is often called deinterlacing, can also improve the coding efficiency because progressively scanned video material can be encoded more efficiently than video material in an interlaced format.

However, most of the existing coding standards can cause perceptible compression artifacts, in particular for low bit rate coding, which, for example, is employed in video conference applications. But also when the maximum possible bit rate that a codec supports is utilized still compression artifacts can occur. Some kind of coding artifacts can be alleviated by post-processing of the decoded signal, for example blocking artifacts due to a block-wise processing of the signal.

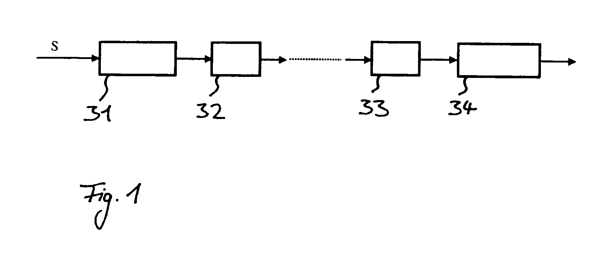

Fig. 1 shows a block diagram of a basic codec system with prior art pre- and post-processing of the signal. In a first step a signal to be coded is pre-processed by a pre-processor 31 and in a second step it is encoded by an encoder 32. These two steps belong to the encoder side. The encoded signal is then transmitted or stored on a storage medium and later read from the storage medium, this is indicated by a dotted line. On the decoder side, the signal is decoded by a decoder 33 and then post-processed by a post-processor 34.

Object of the present invention is therefore to improve coding efficiency and/or reduce compression artifacts.

### SUMMARY OF THE INVENTION

To solve the problem the present invention provides a pre-processor for signals to be encoded comprising a filtering device for filtering a signal with one or more filters, and a providing device for providing information about the filtering process.

To solve the problem the present invention further provides a post-processor for previously filtered, encoded and decoded signals comprising an information retrieving device for retrieving information about the filtering process and an inverse filtering device for inverse filtering the decoded signal based on the retrieved information.

To solve the problem the present invention further provides a pre-processing method for signals to be encoded comprising the steps of filtering a signal with one or more filters and providing information about the filtering process and further provides a method for post-processing previously filtered, encoded and decoded signals comprising the steps of retrieving information about the filtering process and inverse filtering the decoded signal based on the retrieved information.

To solve the problem the present invention further provides a software product comprising program information that when executed on a computing device is operable to carry out the pre-processing method for signals to be encoded and further provides a software product comprising program information that when executed on a computing device is operable to carry out the method for post-processing previously filtered, encoded and decoded signals.

The present invention improves coding efficiency, improves signal quality and does not infringe the coding standard used for encoding and decoding a signal.

By filtering the signal to be encoded the coding efficiency is improved and compression artifacts caused by the codec, used for coding and decoding, will be avoided or kept as small as possible, thus the signal quality of the decoded signal is improved. By providing information about the filtering process, the post-processor is enabled to retrieve the information and apply an inverse filtering to the filtered, encoded and decoded signal. Thereby the signal is brought from its filtered state to a state close to its original state, so that the signal quality is further improved.

Inverse filtering is the process of recovering the input signal of a signal altering system from its output signal. For this purpose one can apply, for example, the inverse filter or its variants, e.g. the pseudoinverse filter or the Wiener filter. This list is not limiting however. To make the inverse filtering more effective, one should know about how the systems acts on a signal. See Anil K. Jain, "Fundamental of Digital Image Processing", ISBN 0-13-336165-9, Prentice-Hall, Inc., 1986 for application of inverse filtering theory to image processing.

A pre-processor and a post-processor according to the present invention do not alter the actual coding and decoding of the signal, therefore no coding standards are infringed. Especially, a signal that, before encoding with an encoder, was pre-processed with a pre-processor according to the present invention can be decoded with a corresponding standard decoder, and, if present, post-processed with a prior-art post-processor.

The pre-processor according to the present invention is favorably developed as follows:

Favorably, the filtering device is adapted to filter the signal in a spatial domain and/or in a temporal domain.

Favorably, the information about the filtering process comprises information describing the one or more filters employed or comprises information describing corresponding one or more filters suitable for inverse filtering the filtered signal.

Favorably, the information about the filtering process comprises information which describes which part or which parts of the signal were filtered.

Favorably, the filtering device is adapted to reduce the high frequency components of a signal.

Favorably, the providing device is adapted to provide the information about the filtering process in the form of codec customer data.

Favorably, the encoded signal and the information about the filtering process are multiplexed into a format for storage or transmission.

The pre-processor for signals to be encoded favorably further comprises an analyzing device for providing an analysis of the signal and wherein the filtering device is adapted to filter the signal based on the analysis provided by the analyzing device.

The pre-processor for signals to be encoded favorably further comprises an encoder for encoding the signal to be encoded. A pre-processor including an encoder is known as compressor. A pre-processor according to the present invention comprising an encoder forms a compressor with superior performance over prior art compressors. Such inventive compressor has improved coding efficiency, provides improved signal quality and conforms to the coding standard.

A favourable pre-processor for signals to be encoded deliberately degrades the signal to be encoded, e.g. by way of blurring, and the way of the deliberate degrading is kept for being integrated into the encoded signal.

The post-processor according to the present invention is favorably developed as follows:

Favorably, the inverse filtering device is adapted to filter the decoded signal in a spatial domain and/or in a temporal domain.

Favorably, the information about the filtering process comprises information describing one or more filters employed in the previous filtering of the signal or comprises information describing corresponding one or more filters suitable for inverse filtering the decoded signal.

Favorably, the information about the filtering process comprises information which describes which part or which parts of the signal have to be inversely filtered by the inverse filtering device.

Favorably, the inverse filtering device is adapted to boost high frequency components of the decoded signal.

Favorably, the retrieving device is adapted to retrieve the information about the filtering process from codec customer data comprised in said previously filtered, encoded, and decoded signals.

Favorably, the encoded signal and the information about the filtering process are demultiplexed from received transmission data or from stored data.

The post-processor for previously filtered, encoded and decoded signals favorably further comprises a decoder for decoding the previously filtered and encoded signals. A post-processor including an encoder is known as decompressor. A post-processor according to the present invention comprising a decoder forms a decompressor with superior performance over prior art decompressors. When decompressing a signal which has been compressed using the techniques of the present invention such inventive decompressor provides improved signal quality.

A favourable post-processor recovers the signals which have been deliberately degraded at the encoder side, thereby making use of the degrading information, which has been integrated into the encoded signals. To recover the signals, this favourable post-processor can e.g. employ any variant of the inverse filter, which performs the signals recovering fully taking advantage of the deliberately degrading procedure.

The pre-processing method for signals to be encoded is favorably developed as follows:

Favorably, the signal is filtered in a spatial domain and/or in a temporal domain.

Favorably, the information about the filtering process comprises information describing the one or more filters employed or comprises information describing corresponding one or more filters suitable for inverse filtering the filtered signal.

Favorably, the information about the filtering process comprises information which describes which part or which parts of the signal were filtered.

Favorably, high frequency components are reduced in the step of filtering the signal with an invertible filter.

Favorably, the signal is encoded with a codec that allows customer data to be added to the encoded signal and the information about the filtering process is provided as such codec customer data.

Favorably, the encoded signal and the information about the filtering process are multiplexed into a signal format for storage or transmission.

The pre-processing method for signals to be encoded favorably further comprises a step of providing an analysis of the signal and wherein the filtering of the signal in the filtering step is based on the analysis of the signal.

The method for post-processing previously filtered, encoded and decoded signals is favorably developed as follows:

Favorably, the signal is inversly filtered in a spatial domain and/or in a temporal domain.

Favorably, the information about the filtering process comprises information describing one or more filters employed in the previous filtering of the signal or comprises information describing corresponding one or more filters suitable for inverse filtering the decoded signal.

Favorably, the information about the filtering process comprises information which describes which part or which parts of the signal have to be inversely filtered.

Favorably, high frequency components are boosted in the step of inverse filtering the decoded signal.

Favorably, the information about the filtering process is retrieved from codec customer data comprised in said previously filtered, encoded, and decoded signals.

Favorably, the encoded signal and the information about the filtering process are demultiplexed from received transmission data or stored data.

The invention can likewise be seen in a corresponding apparatus or computer program product. While the present description may, for the sake of brevity, limit itself to a description of the apparatus of the invention, the teachings of this specification are to be understood as applying equally to and encompassing a corresponding apparatus and computer program product capable of effecting the functionality of the described method.

### BRIEF DESCRIPTION OF THE DRAWINGS

- Fig. 1: shows a block diagram of a codec system with prior art pre- and post-processing.
- Fig. 2: shows a block diagram of a pre-processor according to the present invention including optional devices of the pre-processor.
- Fig. 3: shows a block diagram of a post-processor according to the present invention including optional devices of the post-processor.
- Fig. 4: shows a block diagram of a codec system employing a first embodiment of a pre-processor and a first embodiment of a post-processor according to the present invention.
- Fig. 5: shows a block diagram of a codec system employing a second embodiment of a pre-processor and a second embodiment of a post-processor according to the present invention.

### DESCRIPTION OF THE PREFERRED EMBODIMENTS

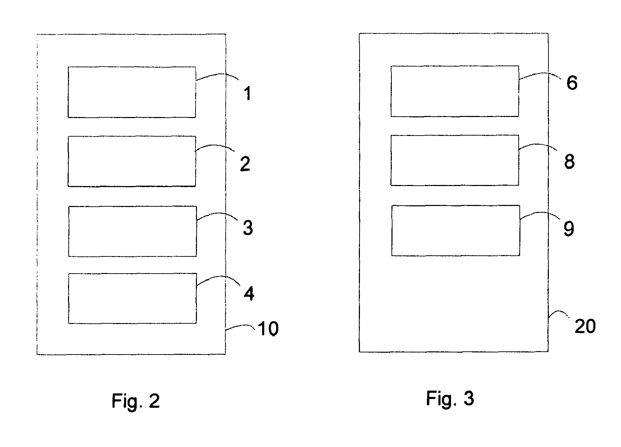

A block-diagram of a pre-processor according to the present invention is shown in Fig. 2. The pre-processor 10 comprises a filtering device 2 for filtering a signal with an invertible filter and a providing device 3 for providing information about the filtering processor. Optionally, the pre-processor 10 comprises an analyzing device 1 and an encoder 4.

A block diagram of a post-processor according to the present invention is shown in Fig. 3. The post-processor 20 comprises an information retrieving device 8 for retrieving information about the filtering process and an inverse filtering device 9 for inverse filtering the decoded signal based on the retrieved information. Optionally, the post-processor comprises a decoder 7.

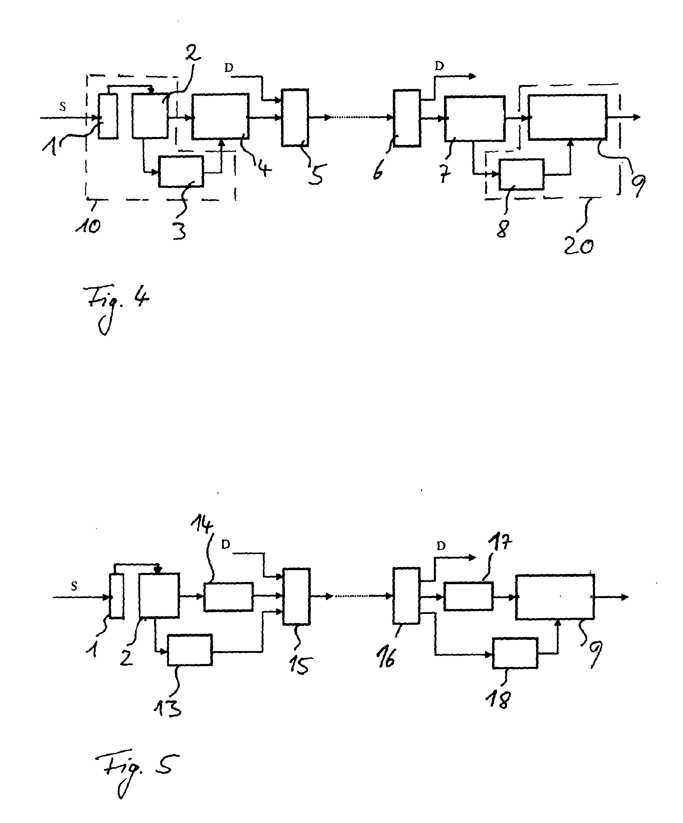

With reference to Fig. 4 a first embodiment of a pre-processor and a first embodiment of a post-processor according to the present invention are now explained, as well as their interrelation and their working within a codec system.

For the purpose of some explanations made in connection with the first embodiment of the pre-processor 10 and the first embodiment of the post-processor 20, the signal S is assumed to be a video signal carrying a sequence of pictures. Generally, the signal S can be of any kind of digital signal, for example, it may be an audio signal or it may be a signal containing only a single image. It may be a signal that is not relating to human vision and audition, for example a signal relating to human touch or a signal steering the operation of a machine.

The pre-processor 10 comprises an analyzing device 1, a filtering device 2, and a providing device 3. A combination of filtering device, providing device and encoder generally forms a data compressor. Such data compressor may comprise an analyzing device.

On the encoder side a signal S, here carrying video material, is first analyzed by the analyzing device 1. The analyzing device 1 provides an analysis of the signal S to the filtering device 2 which filters the signal S based on the analysis. The analyzing device 1 recognizes whether the material is difficult to be encoded by the encoder 4. If the material is difficult to be encoded or even beyond the coding capability of the encoder 4, the analysis provided by the analyzing device 1 instructs the filtering device 2 to filter the signal S with a suitable filter.

The filtering typically comprises filtering in a spatial domain. The spatial filtering can be carried out globally, that is, a whole picture is filtered, or locally, that is, only one part or several parts of a picture are filtered. This may, for example, depend on the material to be encoded, the application area of the codec system and the resources available for pre-processing, encoding and transmission. It is to be noted here, that an analyzing device is not required in all areas of application since it is sometimes desirable to process an entire signal with one filter, selected for example by a human operator, or even to process every signal passing through a compressor with the same filter which is selected once based on the encoder capabilities and on constant properties of the input signals.

Different regions of an image and regions of different images may be processed with different filters by the filtering device 2. Typical regions to be filtered are regions of textures and regions of edge structures that contain too many high frequency components to be coded by the encoder 4 employed in the codec system. For such regions a spatial filter is chosen that blurs the region and thus reduces the high frequency components of the material to be encoded, in other words, of the signal S.

The analyzing device 1 and the filtering device 2 each may be implemented by a microprocessor or microprocessor based device running filter software, for example a personal computer, the microprocessor might be a specialized digital signal processor programmed with suitable instructions, by field-programmable gate array or by any other device capable of performing a filter on a digital signal.

In the case of local filtering, the geometric information about the local regions, e.g. the coordinates of the local regions, forms a part of the information about the filtering process, which is provided by the providing device 3.

The information about the filters employed, given for example in the form of the filter coefficients, and the information about the regions is received by the providing device 3 from the filtering device 1. Alternatively the providing device could receive this information directly from the analyzing device 1. In the first embodiment of the pre-processor 10, this information is formatted by the providing device 3 so as to be suitable to be fed, as codec customer data, into the encoder 4 which encodes the filtered signal. Thus the first embodiment of the pre-processor 3 provides the information about the filtering process in the form of codec customer data. Most coding standards, including AVC, allow the transmission of codec customer data, that is, the addition of user data to the bit stream of the encoded signal.

The providing device 3 may provide the information about the filters employed in a form readily utilizable by the inverse filtering device 9 on the decoder side, for example in the form of the filter coefficients of filters suitable for inverse filtering the signal. Further, the providing device 3 may apply data compression to the information about the filtering process. The providing device 3 may be implemented by a microprocessor or microprocessor based device running software, for example in a personal computer, the microprocessor may be a digital signal processor programmed with suitable instructions, by a field-programmable gate array or by any other device capable of processing information. Also, the providing device 3 may be implemented using the very same piece of hardware as the filtering device 2 and/or the analyzing device 1.

In a typical application scenario of a codec system, the encoded signal comprising the codec customer data is multiplexed with other data D, including for example an accompanying, compressed audio signal, into a format suitable for joint transmission or storage. This is achieved by a multiplexer 5. When there is no other data D the multiplexing operation may omitted or may be trivial.

The multiplexed signal can, for example, be stored on a hard-disk, on a flash EEPROM, on a CD- or DVD-ROM, or on any other storage device and storage medium. If the data is transmitted to a remote device, any data connection can be utilized, for example a data connection over a telephone line, an IEEE 1394 connection, a connection over a computer network, such as for example, the internet, a local area network (LAN) or a wireless area network (WLAN). The transmission may be a real time transmission or not. Depending on the type of connection, further subsequent processing may have be applied to the multiplexed signal.

The post-processor 20 on the decoder side comprises a retrieving device 8 and an inverse filtering device 9. A combination of decoder, retrieving device and filtering device generally forms a data decompressor.

On the decoder side the other data D and the encoded signal comprising the codec customer data are demultiplexed from received transmission data or from stored data by a demultiplexer 6. The other data D is forwarded to suitable processing devices, for example an audio decompressor.

The encoded signal comprising the codec customer data is fed into a decoder 7 which decodes the signal and extracts the codec customer data. The codec customer data is received by the retrieving device 8. The retrieving device 8 performs the necessary operations on the codec customer data to bring the information about the filtering process into a form expected by the inverse filtering device 9 before sending it to the filtering device 9. If the providing device 3 did compress the data, this includes decompressing the data. The inverse filtering device 9 might expect filtering coefficients defining the filters to be used in the inverse filtering step. In this case, if these coefficients are not already contained in the information about the filtering process provided by the providing device 3, the retrieving device 8 will determine these filter coefficients. The retrieving device 8 may be implemented by a microprocessor or microprocessor based device running software, for example in a personal computer, the microprocessor might be a digital signal processor programmed with suitable instructions, by a field-programmable gate array or by any other device capable of processing information.

The information about the filtering process is send from the receiving device 8 to the inverse filtering device 9. Based on this information, the filtering device 9 then inversely filters the decoded signal received from the decoder 7. The filters employed here may, for example, be inverse filters or its variants e.g pseudoinverse filters or Wiener filters. This list is not limiting and other filters might be used as well as long as an inverse filtering effect can be obtained. The inverse filtering is applied to those regions which were filtered by the filtering device 2 on the encoder side. The information about the regions is a part of the information about the filtering process retrieved by the retrieving device 8 and send to the inverse filtering device 9. The processing of the signal by the codec system is finished after the inverse filtering device 9 has inversely filtered the decoded signal. Note however that the processing of the signal typically is by part, so that generally while one part of the signal is being processed another part is waiting to be processed and still another part already is processed.

The inverse filtering device 9 may be implemented by a microprocessor or microprocessor based device running filter software, for example in a personal computer, the microprocessor might be a digital signal processor programmed with suitable instructions, by a field-programmable gate array or by any other device capable of performing a filter on a digital signal. Also, the inverse filtering device 9 may be implemented using the very same piece of hardware as the retrieving device 8.

The filtering in the pre-processing, here for example spatial blurring, reduces compression artifacts and improves the coding efficiency of the encoder 4. The reverse filtering in the post-processing prevents the image quality from being degraded by remaining in the filtered state, here in the spatially blurred state. At the same time, no coding standards are infringed by the processing. If on the decoder side there is no post-processor capable of retrieving the information about the filtering process and of inverse filtering the decoded signal, the information about the filtering process comprised in the codec customer data will simply be ignored, the operation of the decoder 7 however is not affected, that is, the signal can be decoded. Even more, the benefits of the filtering in the pre-processing still can be enjoyed.

With reference to Fig. 5 a second embodiment of a pre-processor and a second embodiment of a post-processor according to the present invention are now explained, as well as their interrelation and their working within a codec system.

The second example of a codec system taking advantage of the the present invention differs from the first example only in that the information about the filtering process is not dealt with as codec customer data, instead of this, the information is multiplexed with the encoded signal by a multiplexer. Obviously, most explanations made in connection with the first example apply to the second example as well. It is avoided to repeat explanations where applicable.

In the second example, the providing device 13, after having received the information about the filtering process from the filtering device 1, formats the information so as to be suitable to be fed into the multiplexer 15. The multiplexer 15 multiplexes this information together with the encoded signal and, if present, other data D into a format suitable for joint transmission or storage. As in the first embodiment of the pre-processor, the providing device 13 may compress the information and may provide the information about the filtering process in a form readily utilizable by the inverse filtering device 9 on the decoder side. Storage and transmission of the multiplexed signal is the same as in the first example of a codec system.

On the decoder side the encoded signal, the information about the filtering process and, if present, the other data D are demultiplexed from received transmission data or from stored data by a demultiplexer 16. The encoded signal is fed into the decoder 17, where it is decoded, and the information about the filtering process is fed into the retrieving device 18. The retrieving device 18 performs the necessary operations on the information about the filtering process to bring it into a form expected by the inverse filtering device 9 before sending it to the filtering device 9. If the providing device 13 did compress the data, this includes decompressing the data. The inverse filtering device 9 might expect filtering coefficients defining the filters to be used in the inverse filtering step. In this case, if these coefficients are not already contained in the information about the filtering process provided by the providing device 13, the retrieving device 18 will determine these filter coefficients.

The second example of a codec system is advantageous over the first example in the case of large amounts of information about the filtering process. In most application cases however, this information will not be much and thus the proceeding of the first embodiment is usually preferred. In case the codec does not support codec customer data, only the second example can be employed.

The second example of a codec system offers the same advantages as the first example. The filtering in the pre-processing reduces compression artefacts and improves the coding efficiency of the encoder 14. The reverse filtering in the post-processing prevents the signal quality from being degraded by remaining in the filtered state. At the same time, no coding standards are infringed by the processing. If on the decoder side there is no post-processor capable of retrieving the information about the filtering process and of inverse filtering the decoded signal, the information about the filtering process demultiplexed from received data or stored data will simply be ignored, the operation of the decoder 17 however is not affected, that is, the signal can be decoded and the benefits of the filtering in the pre-processing still can be enjoyed.

Both embodiments of the post-processor have in common, that they provide the information about the filtering process together with the encoded signal in a form so as to be automatically obtained the one with the other. This, generally, adds to the convenience and reliability of a codec system employing the present invention.

Filtering and subsequent inverse filtering is possible also in the temporal domain without infringing the coding standard. Audio signals for example will be processed in the temporal domain. Temporal filtering however can also be applied advantageously to video signals. In temporal domain, motion poses a challenge to codecs. The usual way codecs deal with motion is to do motion estimation and make use of estimated motion vectors. However motion vectors are not always sufficient for this purpose, for instance one complains that the motion vectors adapted by MPEG-2 are too few or too un-accurate. Like blurring the high frequency components in spatial domain, one can also blur the high frequency components in a temporal domain, that is, the difference signals of consecutive pictures. The temporal blurring improves the coding efficiency and reduces compression artifacts. In the AVC coding standard for example, the B and P pictures are encoded more efficiently. The information about the temporal filtering process is used to do a corresponding inverse filtering on the decoder side in order to recover the original difference signals of neighboring pictures, and to further recover the desired B and P pictures of the AVC coding standard. Just as the spatial filtering described above, this kind of temporal filtering complies with the coding standards.

Without any modification to the figures or to the description, the above two examples of codec systems taking advantage of the present invention can be seen as having incorporated such kind of temporal filtering and inverse filtering. In this case, the analysis provided by the analyzing device 1 includes a temporal analysis, the information about the filtering process additionally comprises information about the temporal filtering process and the filtering device 1 and the inverse filtering device 9 will additionally perform temporal filtering.

The embodiments of the pre-processor and the post-processor can easily be extended with devices to perform other pre- and post-processing tasks, such as noise reduction, deinterlacing and blocking artifact reduction. If sufficiently flexible programmable and if powerful enough to perform extra operations, the devices used in the embodiments might be suitably programmed to additionally perform at least some of these tasks.

While the preferred and alternative embodiments of the present invention have been disclosed and detailed herein, it will be apparent to those skilled in the art that various changes may be made to the configuration, operation and form of the invention without departing from the scope thereof. In particular, it is noted that the respective features of the invention, even those disclosed solely in combination with other features of the invention, may be combined in any combination excepting those readily apparent to the person skilled in the art as nonsensical.

## Claims

1. A pre-processor (10) for signals to be encoded comprising
a filtering device (2) for filtering a signal with one or more filters,
a providing device (3) for providing information about the filtering process.

2. A pre-processor (10) for signals to be encoded according to claim 1, wherein the filtering device (2) is adapted to filter the signal in a spatial domain and/or in a temporal domain.

3. A pre-processor (10) for signals to be encoded according to claim 1 or 2, wherein the information about the filtering process comprises information describing the one or more filters employed or comprises information describing corresponding one or more filters suitable for inverse filtering the filtered signal.

4. A pre-processor (10) for signals to be encoded according to claim 1, 2 or 3, wherein the information about the filtering process comprises information which describes which part or which parts of the signal were filtered.

5. A pre-processor (10) for signals to be encoded according to any one of the claims 1 to 4, wherein the filtering device (2) is adapted to reduce the high frequency components of a signal.

6. A pre-processor (10) for signals to be encoded according to any one of the claims 1 to 5, wherein the providing device (3) is adapted to provide the information about the filtering process in the form of codec customer data.

7. A pre-processor (10) for signals to be encoded according to any one of the claims 1 to 5, wherein the encoded signal and the information about the filtering process are multiplexed into a format for storage or transmission.

8. A pre-processor (10) for signals to be encoded according to any one of the claims 1 to 7, further comprising an analyzing device (1) (1) for providing an analysis of the signal and wherein the filtering device (2) is adapted to filter the signal based on the analysis provided by the analyzing device.

9. A pre-processor (10) for signals to be encoded according to any one of the claims 1 to 8, further comprising an encoder (4) for encoding the signal to be encoded.

10. A post-processor (20) for previously filtered, encoded and decoded signals comprising
an information retrieving device (8) for retrieving information about the filtering process,
an inverse filtering device (9) for inverse filtering the decoded signal based on the retrieved information.

11. A post-processor (20) for previously filtered, encoded and decoded signals according to claim 10, wherein the inverse filtering device (9) is adapted to filter the decoded signal in a spatial domain and/or in a temporal domain.

12. A post-processor (20) for previously filtered, encoded and decoded signals according to claim 10 or 11, wherein the information about the filtering process comprises information describing one or more filters employed in the previous filtering of the signal or comprises information describing corresponding one or more filters suitable for inverse filtering the decoded signal.

13. A post-processor (20) for signals previously filtered, encoded and decoded according to claim 10, 11 or 12, wherein the information about the filtering process comprises information which describes which part or which parts of the signal have to be inverse filtered by the inverse filtering device.

14. A post-processor (20) for previously filtered, encoded and decoded signals according to any one of the claims 10 to 13, wherein the inverse filtering device (9) is adapted to boost high frequency components of the decoded signal.

15. A post-processor (20) for previously filtered, encoded and decoded signals according to any one of the claims 10 to 14, wherein the retrieving device is adapted to retrieve the information about the filtering process from codec customer data comprised in said previously filtered, encoded, and decoded signals.

16. A post-processor (20) for previously filtered, encoded and decoded signals according to any one of the claims 10 to 14, wherein the encoded signal and the information about the filtering process are demultiplexed from received transmission data or from stored data.

17. A post-processor (20) for previously filtered, encoded and decoded signals according to any one of the claims 10 to 16, further comprising a decoder (7) for decoding the previously filtered and encoded signals.

18. A pre-processing method for signals to be encoded comprising the steps of filtering a signal with one or more filters,
providing information about the filtering process.

19. A pre-processing method for signals to be encoded according to claim 18, wherein the signal is filtered in a spatial domain and/or in a temporal domain.

20. A pre-processing method for signals to be encoded according to claim 18 or 19, wherein the information about the filtering process comprises information describing the one or more filters employed or comprises information describing corresponding one or more filters suitable for inverse filtering the filtered signal.

21. A pre-processing method for signals to be encoded according to claim 18, 19 or 20, wherein the information about the filtering process comprises information which describes which part or which parts of the signal were filtered.

22. A pre-processing method for signals to be encoded according to any one of the claims 18 to 21, wherein high frequency components are reduced in the step of filtering the signal with an invertible filter.

23. A pre-processing method for signals to be encoded according to any one of the claims 18 to 22, wherein the signal is encoded with a codec that allows customer data to be added to the encoded signal and the information about the filtering process is provided as such codec customer data.

24. A pre-processing method for signals to be encoded according to any one of the claims 18 to 22, wherein the encoded signal and the information about the filtering process are multiplexed into a signal format for storage or transmission.

25. A pre-processing method for signals to be encoded according to any one of the claims 18 to 24, further comprising a step of providing an analysis of the signal and wherein the filtering of the signal in the filtering step is based on the analysis of the signal.

26. A method for post-processing previously filtered, encoded and decoded signals comprising the steps of
retrieving information about the filtering process,
inverse filtering the decoded signal based on the retrieved information.

27. A method for post-processing previously filtered, encoded and decoded signals according to claim 26, wherein the signal is inversely filtered in a spatial domain and/or in a temporal domain.

28. A method for post-processing previously filtered, encoded and decoded signals according to claim 26 or 27, wherein the information about the filtering process comprises information describing one or more filters employed in the previous filtering of the signal or comprises information describing corresponding one or more filters suitable for inversely filtering the decoded signal.

29. A method for post-processing previously filtered, encoded and decoded signals according to claim 26, 27 or 28, wherein the information about the filtering process comprises information which describes which part or which parts of the signal have to be inversely filtered.

30. A method for post-processing previously filtered, encoded and decoded signals according to any one of the claims 26 to 29, wherein high frequency components are boosted in the step of inverse filtering the decoded signal.

31. A method for post-processing previously filtered, encoded and decoded signals according to any one of the claims 26 to 30, wherein the information about the filtering process is retrieved from codec customer data comprised in said previously filtered, encoded, and decoded signals.

32. A method for post-processing previously filtered, encoded and decoded signals according to any one of the claims 26 to 30, wherein the encoded signal and the information about the filtering process are demultiplexed from received transmission data or stored data.

33. A software product comprising program information that when executed on a computing device is operable to carry out the pre-processing method for signals to be encoded according to any of the claims 18 to 25.

34. A software product comprising program information that when executed on a computing device is operable to carry out the method for post-processing previously filtered, encoded and decoded signals according to any of the claims 26 to 32.
